# EUROPEAN PATENT APPLICATION

(11) **EP 1 380 611 A1**
(43) Date of publication of application: **14.01.2004**
(21) Application number: 02254861.4
(22) Date of filing: 10.07.2002
(51) Int. Cl.: C08G 77/04, C08L 83/04, C09D 183/04, C07F 7/08

(54) **Process for the preparation of polyorganosilylated carboxylate monomers or polymers thereof**

(71) Applicant: SigmaKalon Group B.V., 1422 AD Uithoorn (NL)
(72) Inventor: Plehiers, Mark, 1000 Bruxelles (BE); Gillard, Michel, 1348 Louvain-la-Neuve (BE)
(74) Representative: Walsh, David Patrick

(57) **Abstract**

The present invention relates to a process for the preparation of polyorganosilylated carboxylate monomers or polymers thereof, comprising the steps of reacting a cyclosiloxane of formula (R4R5SiO)n with an unsaturated organosilylated carboxylate monomer or a copolymer or a polymer thereof under the presence of a suitable catalyst.

## Description

### Field of the invention

The invention relates to an improved method for the preparation of polyorganosilylated carboxylate monomers or polymers. The invention further relates to said obtained polyorganosilylated carboxylate monomers or polymers and in another aspect, the invention relates to their use for the synthesis of hydrolysable polymers, such as binders for modern antifouling coatings.

### Background to the invention

Antifouling paints are used in general to prevent and delay the fouling of underwater structures (e.g. ships' bottom, docks, fishnets, and buoys) caused by various marine organisms such as shells, seaweed and aquatic bacteria. When such aquatic organisms adhere and propagate on an underwater structure like the bottom of a ship, the surface roughness of the whole ship may be increased to induce decrease of velocity of the ship and subsequently increase of fuel consumption. The removal of these aquatic organisms from the ship's bottom requires much labour and a long period of working time. In addition, if these aquatic organisms adhere and propagate on an underwater structure such as a steel structure they deteriorate their anticorrosive coating films leading to a reduction of the lifetime of the underwater structure.

Underwater structures are therefore preferably coated with an antifouling paint employing polymers containing various hydrolysable groups and more specifically organosilyl groups. Several antifouling paint are known.

EP 0 297 505 for example relates to an antifouling paint that contains a polymer having organosilyl groups and/or organopolysiloxane groups in side chains. Since the organopolysiloxane group is derived from dehydrating condensation or like means of silicon oil with methacrylic acid, this document refers to a mixture of oligomers having different numbers of the recurrence of the organosiloxane group.

WO 84/02915 and JP 63215780 describe an antifouling paint of the hydrolysable self-polishing type employing a methacrylic ester polymer having triorganosilyl group in side chains or a similar polymer. Other examples related to the use of organosilyl acrylate polymers in antifouling compositions are EP 1 127 902, EP 1 127 925, JP 63118381, WO 96/38508, EP 0 802 243, EP 0 714 957, JP 07018216, JP 01132668, JP 01146969 and US Pat. No. 4,957,989 hereby incorporated by reference.

The polymers used in the above-described antifouling paints are based on silylated carboxylate monomers.

Several processes are known as conventional techniques for the synthesis of said silylated carboxylate monomers.

JP 5306290 for example describes a process to obtain a methacrylic functional group-containing organosilicon compound. The process comprises reacting methacrylic acid with a halogenoalkylsilane e.g. trialkylsilylchloride in the presence of a tertiary amine compound having a cyclic structure. This process has disadvantages such as the reduced availability and storage stability of the silyl chloride. Moreover, the reaction yields as a by-product a hydrogen halide, which provokes the corrosion of the production equipment, or a halide salt, which has to be removed by filtration.

The synthesis of trimethylsilyl methacrylate from methacrylic acid and trimethylsilyl chloride is disclosed in Fedotov. *et. al.* Zh.Prikl.Khim. (1971), 44 (3), 695. The synthesis of trimethylsilyl methacrylate from methacrylic acid and hexamethyldisilazane is described in A. Chapman & A.D. Jenkins J.Polym.Sci. Polym.Chem.Edn. vol 15, p.3075 (1977). This method has the disadvantage of producing ammonia.

JP 10195084 discloses the reaction of unsaturated carboxylic acid such as acrylic acid or methacrylic acid with a trialkylsilylhydride compound in the presence of a copper catalyst. One of the disadvantages of this method is the risk of hydrogenation of the unsaturated carboxylic acid due to a side reaction of the produced H2 on the carbon-carbon double bond.

US Pat. No. 6,063,887 describes 1-acyloxy-organotetrasiloxane obtained by the reaction of hexamethylcylcotrisoloxane with an acyloxysilane.

An object of the present invention is to provide a novel process capable of readily preparing polyorganosilylated carboxylate monomers or polymers thereof in a high yield from easily available starting materials.

Another object of the present invention is to provide a more direct method for the synthesis of such polyorganosilylated carboxylate monomers or polymers thereof, with easy work-up procedures.

A further object of the present invention is to provide a novel process offering an improvement vis-à-vis of the disadvantages disclosed above.

### Summary of the invention

The present invention relates to a process for the preparation of polyorganosilylated carboxylate monomers of general formula (I) or polymers thereof, comprising the steps of reacting a cyclosiloxane of formula (R⁴R⁵SiO)ₙ with an unsaturated organosilylated carboxylate of formula (II) or a copolymer or a polymer thereof under the presence of a suitable catalyst, wherein R¹, R², R³, R⁴, R⁵ each independently represent hydrogen, alkyl, alkenyl, alkynyl, alkyloxy, aryl, aralkyl or halogen radical optionally substituted by one or more substituents independently selected from the group comprising alkyl, aralkyl, aryl, hydroxy, halogen, amino or amino alkyl radicals, R⁶ represents hydrogen, alkyl radical or -CH₂-CO₂-SiR¹R²R³, R⁷ represents hydrogen, alkyl radical or - COOR⁹ wherein R⁹ represents an alkyl group, R⁸ represents hydrogen, alkyl radical or -CH₂-CO₂-(SiR⁴R⁵O)ₙ-SiR¹R²R³, and n represents a number of dihydrocarbylsiloxane units from 3 to 20. 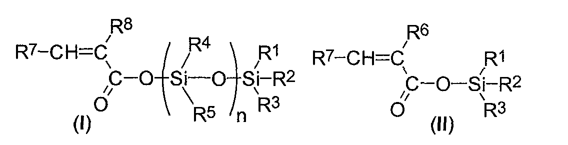 According to an embodiment of the present invention, R¹, R², R³, R⁴, R⁵, R⁶ and R⁹ are each independently selected from the group comprising methyl, ethyl, propyl, isopropyl, isobutyl, n-butyl, sec-butyl, t-butyl. Preferably R¹, R², R³, R⁴, R⁵, R⁶ and R⁹ are methyl.

It was surprisingly found that by reacting cyclosiloxane with unsaturated organosilylated carboxylate monomers, polymers or copolymers thereof, polyorganosilylated carboxylates could be synthesized, when unsaturated organosilylated carboxylates are known to be not very reactive compounds and to polymerise easily.

### Detailed Description of the Invention

The present invention relates to a new process for the synthesis of polyorganosilylated carboxylate monomers of general formula (I) or polymers thereof, wherein a cyclosiloxane of formula (R⁴R⁵SiO)ₙ is reacted with an unsaturated organosilylated carboxylate of formula (II) or copolymers or polymers thereof under the presence of a suitable catalyst, wherein R¹, R², R³, R⁴, R⁵, R⁶, R⁷, R⁸ and R⁹ have the same meaning as that defined above.

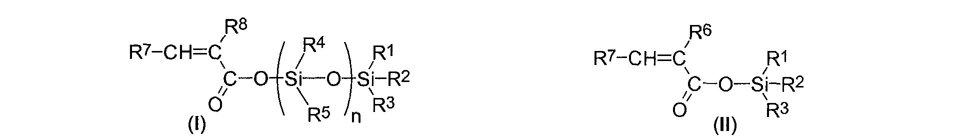

The process of the invention has the advantage of producing polyorganosilylated carboxylate monomers or polymers with exactly the desired number of the dihydrocarbylsilyloxane units.

The process according to the invention is characterized by a specific telomerisation. It was surprisingly found that the telomerisation of cyclosiloxane could be performed with unsaturated organosilylated carboxylate, which are not very reactive compounds and are known to polymerise easily.

The term `telomerisation' as used herein refers to a process yielding a low molecular weight monomers consisting of a chain of a limited number of units terminated at each end by a radical of a different compound (the telogen). See Oxford English Dictionary, Second Ed., Clarendon, Oxford, 1989. The telomerisation reaction proceeds as a polymerisation reaction between two substances providing respectively the terminal groups and internal linkages of the resulting telomer molecule.

As used herein, the term "polymer" refers to the product of a polymerisation reaction, and is inclusive of homopolymers, copolymers, terpolymers, etc.

As used herein, the term "copolymer" refers to polymers formed by the polymerisation reaction of at least two different monomers.

As used herein, the term "independently selected" indicates that the each radical R so described, can be identical or different. For example each R⁴ in compound of formula (I) may be different for each value of n.

The term "alkyl", as used herein, relates to saturated hydrocarbon radicals having straight, branched or cyclic moieties or combinations thereof and contains 1 to 20 carbon atoms, preferably 1 to10 carbon atoms, more preferably 1 to 8 carbon atoms, still more preferably 1 to 6 carbon atoms, yet more preferably 1 to 4 carbon atoms. Examples of such radicals include methyl, ethyl, n-propyl, isopropyl n-butyl, isobutyl, set-butyl, tert-butyl, 2-methylbutyl, pentyl, iso-amyl, hexyl, cyclohexyl, 3-methylpentyl, octyl and the like.

The term "alkenyl", as used herein, relates to hydrocarbon radicals having one or several double bonds, having straight, branched or cyclic moieties or combinations thereof and containing from 2 to 18 carbon atoms, preferably 2 to 10 carbon atoms, more preferably from 2 to 8 carbon atoms, still more preferably 2 to 6 carbon atoms, yet more preferably 2 to 4 carbon atoms. Examples of alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like.

The term "alkynyl", as used herein, relates to hydrocarbon radicals having one or several triple bonds, having straight, branched or cyclic moieties or combinations thereof and having from 2 to 18 carbon atoms, preferably 2 to 10 carbon atoms, more preferably from 2 to 8 carbon atoms, still more preferably from 2 to 6 carbon atoms, yet more preferably 2 to 4 carbon atoms. Examples of alkynyl radicals include ethynyl, propynyl, (propargyl), butynyl, pentynyl, hexynyl and the like.

The term "aryl" as used herein, relates to an organic radical derived from an aromatic hydrocarbon by removal of one hydrogen, and includes any monocyclic or bicyclic carbon ring of up to 7 members in each ring, wherein at least one ring is aromatic. Said radical may be optionally substituted with one or more substituents independently selected from alkyl, alkoxy, halogen, hydroxy or amino radicals. Examples of aryl includes phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like.

The term "aralkyl" as used herein, relates to a group of the formula alkyl-aryl, in which alkyl and aryl have the same meaning as defined above. Examples of aralkyl radicals include benzyl, phenethyl, dibenzylmethyl, methylphenylmethyl, 3- (2-naphthyl)-butyl, and the like.

The process according to the invention consists of subjecting a cyclosiloxane of formula (R⁴R⁵SiO)ₙ to a ring-opening reaction with an unsaturated organosilylated carboxylate of formula (II) or a copolymer or a polymer thereof, in the presence of a suitable catalyst and with or without solvent. The reaction is preferably set up in such a way that each mole of cyclosiloxane is treated with at least one mole of unsaturated organosilylated carboxylate of formula (II) or with a copolymer or a polymer of said carboxylate.

The reaction can be performed with or without solvents. Suitable solvents which can be used in the process according to the invention are nonpolar inert solvents such as for example benzene, toluene, xylene, mesitylene or ethylbenzene, aliphatic hydrocarbons, typically pentane, hexane, cyclohexane, heptane, octane, decane or decahydronaphthalene, noncyclic ethers, typically diethyl ether, diisopropyl ether, diisopropyl ether or diisobutyl ether, or mixtures thereof. In a preferred embodiment, said solvent is toluene.

Examples of the cyclosiloxanes which may be employed in the present process are described in the "Encyclopedia of Polymer Science and Engineering", Mark et al., eds., 2nd ed., John Wiley & Sons (1989), Vol. 15, p.207 et seq., the contents of which are incorporated by reference herein.

Examples of suitable cyclosiloxanes of formula (R⁴R⁵SiO)ₙ for use in the process according to the invention include but is not limited to 1,1,3,3,5,5-hexamethyl-cyclotrisiloxane (D3), 1,1,3,3,5,5-hexaethyl-cyclotrisiloxane, 1,1,3,3,5,5-hexaphenyl-cyclotrisiloxane, 1,1,3,3,5,5-hexavinyl-cyclotrisiloxane, 1,3,5-trimethyl-1,3,5-trivinyl-cyclotrisiloxane, 1,3,5-trimethyl-1,3,5-triphenyl-cyclotrisiloxane, 1,3,5-trimethyl-1,3,5-tripropyl-cyclotrisiloxane, 1,3,5-triethyl-1,3,5-trimethyl-cyclotrisiloxane, 1,3,5-trimethyl-1,3,5-triphenethyl-cyclosiloxane, 1,3,5-trivinyltrihydro-cyclotrisiloxane, 1,3,5-trimethyltrihydro-cyclotrisiloxane, pentamethyl-cyclotrisiloxanes, 1,3,5-trimethyl-1,3,5-tris(3',3',3'-trifluoropropyl)-cyclotrisiloxane (F3), 1,1,3,3,5,5,7,7-octamethyl-cyclotetrasiloxane (D4), 1,1,3,3,5,5,7,7-octaphenyl-cyclotetrasiloxane, 1,1,3,3,5,5,7,7-octavinyl-cyclotetrasiloxane, 1,3,5,7-tetramethyl-1,3,5,7-tetrahydro-cyclotetrasiloxane, 1,3,5,7-tetramethyl-1,3,5,7-tetra(1-octyl)-cyclotetrasiloxane, 1,3,5,7-tetravinyl-1,3,5,7-tetramethyl-cyclotetrasiloxane, 1,3,5,7-tetravinyl-1,3,5,7-tetraethyl-cyclotetrasiloxane, 1,3,5,7-tetraaIIyI-1,3,5,7-tetraphenyl-cyclotetrasiloxane, 1,3,5,7-tetra(1-hexadecyl)-1,3,5,7-tetramethyl-cyclotetrasiloxane, 1,3,5,7-tetraoctyltetrahydro-cyclotetrasiloxane, 1,3,5,7-tetravinyltetrahydro-cyclotetrasiloxane, 1,3,5,7-tetraethyltetrahydro-cyclotetrasiloxane, 1,3,5,7-tetrapropenyltetrahydro-cyclotetrasiloxane, 1,3,5,7-tetrapentenyltetrapentyl-cyclotetrasiloxane, 1,3,5,7-tetraphenyltetrahydro-cyclotetrasiloxane, pentamethyl-cyclotetrasiloxanes, hexamethyl-cyclotetrasiloxanes, 1,3,5,7-tetramethyl-1,3,5,7-tetrakis(3',3',3'-trifluoropropyl)-cyclotetrasiloxane (F4) 1,1,3,3,5,5,7,7,9,9-decamethyl-cyclopentasiloxane (D5), 1,3,5,7,9-pentavinyl-1,3,5,7,9-pentamethyl-cyclopentasiloxane, 1,3,5,7,9-pentadecenyl-1,3,5,7,9-pentapropyl-cyclopentasiloxane, 1,3,5,7,9-pentamethylpentahydro-cyclopentasiloxane, 1,3,5,7,9-pentavinylpentahydro-cyclopentasiloxane, tetramethyl-cyclopentasiloxanes, hexamethyl-cyclopentasiloxanes, heptamethyl-cyclopentasiloxanes, 1,1,3,3,5,5,7,7,9,9,11,11-dodecamethyl-cyclohexasiloxane (D6), 1,3,5,7,9,11-hexavinylhexamethyl-cyclohexasiloxane, 1,3,5,7,9,11-hexamethylhexahydro-cyclohexasiloxane, tetramethyl-cyclohexasiloxanes, pentamethyl-cyclohexasiloxanes, 1,3,5,7,9,11,13,15,17,19-decavinyldecahydro-cyclodecasiloxane, 1,3,5,7,9,11,13,15,17,19,21,23,25,27,29-pentadecavinylpentadecahydro-cyclopentadecasiloxane and the like.

Examples of the unsaturated organosilylated carboxylate of formula (II) which can be used in the process according to the invention include but are not limited to trimethylsilyl (meth)acrylate, tri-t-butylsilyl (meth)acrylate, tribenzylsilyl (meth)acrylate, triethylsilyl (meth)acrylate, tri-isopropylsilyl (meth)acrylate, triisobutylsilyl (meth)acrylate, tri-n-amylsilyl (meth)acrylate, tri-n-butylsilyl (meth)acrylate, tri-n-dodecylsilyl (meth)acrylate, tri-n-hexylsilyl (meth)acrylate, tri-n-octylsilyl (meth)acrylate, tri-n-propylsilyl (meth)acrylate, triphenylsilyl (meth)acrylate, tri-p-methylphenylsilyl (meth)acrylate, dibutylcyclohexylsilyl (meth)acrylate, dibutylphenylsilyl (meth)acrylate; dicyclohexylphenylsilyl (meth)acrylate, diisopropyl-n-butylsilyl (meth)acrylate, diisopropylstearylsilyl (meth)acrylate, dimethylbutylsilyl (meth)acrylate, dimethylcyclohexylsilyl (meth)acrylate, dimethylhexylsilyl (meth)acrylate, dimethyloctylsilyl (meth)acrylate, dimethylphenylsilyl (meth)acrylate, ethyldibutylsilyl (meth)acrylate, ethyldimethylsilyl (meth)acrylate, lauryldiphenylsilyl (meth)acrylate, methyldibutylsilyl (meth)acrylate, n-octyldi-n-butylsilyl (meth)acrylate, t-butyl dimethylsilyl (meth)acrylate t-butyldiphenylsilyl (meth)acrylate, bis(trimethylsilyl) itaconate, t-butyldiphenylsilyl methyl fumarate, t-butyldiphenylsilyl methyl maleate, t-butyldiphenylsilyl n-butyl fumarate, t-butyldiphenylsilyl n-butyl maleate, triisopropylsilyl amyl fumarate, triisopropylsilyl amyl maleate, triisopropylsilyl methyl fumarate, triisopropylsilyl methyl maleate, tri-n-butylsilyl n-butyl fumarate, tri-n-butylsilyl n-butyl maleate, and the like and polymers or copolymers thereof, wherein methacrylate or acrylate is herein collectively referred to as a "(meth)acrylate".

Examples of suitable catalyst for the reaction include but are not limited to acidic catalyst. Examples of acid catalysts include proton acid catalysts and Lewis acid catalysts. In a preferred embodiment, the proton acid catalysts suitable for use in the present process include but are not limited to hydrochloric acid, nitric acid, acetic acid, sulfuric acid, trifluoromethanesulfonic acid, trifluoracetic acid. In a preferred embodiment, trifluoromethanesulfonic acid is used. Said acid catalyst may be a heterogeneous acids such as the strongly acidic ion exchange resins, all of which are of the sulfonic type. Examples of commercially available strongly acidic ion exchange resins of the sulfonic type are those known by the trade names AMBERLYST A15, AMBERLYST 38 W, AMBERLYST 36, AMBERJET 1500H, AMBERJET 1200H, (AMBERJET is a trademark of Rohm and Haas Company) DOWEX MSC-1, DOWEX 5OW (DOWEX is a trademark of Dow Chemical Company), DELOXAN ASP 1/9 (DELOXAN is a trademark of Degussa), DIAION SK1B (DIAION is a trademark of Mitsubushi), LEWATIT VP OC 1812, LEWATIT S 100 MB, LEWATIT S 100 G1 (LEWATIT is a trademark of Bayer), NAFION SAC13, NAFION NR50 (NAFION is a trademark of DuPont) and CT275 (a macroporous resin with a medium pore diameter in the range of from 600 to 750, available from Purlite). In another embodiment, suitable Lewis acid catalysts include but are not limited to ZnCl₂, BeCl₂, TiCl₄, SnCl₄, FeCl₃, FeCl₂, SbCl₅, AlCl₃ and other metal halides. Co-catalysts such as acetic acid may also be used in the process according to the invention.

Because they permit the suppression of equilibration reactions due to siloxane bond rearrangement, selectively bringing about the ring-opening reaction of the cyclosiloxane, and can suppress undesirable side reactions, metal halides exhibiting Lewis acid properties are particularly useful. In a preferred embodiment, the catalyst used during the reaction is ZnCl₂. When a heterogeneous acid is used in the process according to the invention, this has the advantage of easier separation from the reaction product. In a preferred embodiment, AMBERLYST A15 is used. When the reaction is performed with copolymers of unsaturated organosilylated carboxylate, the use of heterogeneous catalysts is preferred because it offers the advantage of being easily removed from the resin at the end of the process.

The reaction may be conducted with or without added polymerisation inhibitor. The polymerisation inhibitors which can be used in the process of the invention are preferably phenolic stabilizers such as cresol or hydroquinone derivatives, e.g. bis(tert-butyl)cresol, 2,5-di-tert-butylhydroquinone, 4-methoxy-phenol, 2,6-di-tert-butyl-4-methylphenol or the monomethyl ether of hydroquinone or phenothiazine, in a concentration ranging from 0.001% to 2% by weight, preferably from 0.002% to 0.7% by weight, based on the total weight of cyclosiloxane and unsaturated organosilylated carboxylate (II).

The polyorganosilylated carboxylate compound of formula (I) can be isolated by distillation under reduced pressure. The reaction progress may be monitored by any suitable analytical method. The polymer of polyorganosilylated carboxylate compound of formula (I) can be isolated by filtrating the catalyst at the end of the reaction.

Examples of the polyorganosilylated carboxylate monomers obtained by the process of the invention include but are not limited to nonamethyl-1-(meth)acryloyloxytetrasiloxane, nonaethyl-1-(meth)acryloyloxytetrasiloxane, nona-t-butyl-1-(meth)acryloyloxytetrasiloxane, nonabenzyl-1-(meth)acryloyloxytetrasiloxane, nona-isopropyl-1-(meth)acryloyloxytetrasiloxane, nona-n-propyl-1-(meth)acryloyloxytetrasiloxane, nona-isobutyl-1-(meth)acryloyloxytetrasiloxane, nona-amyl-1-(meth)acryloyloxytetrasiloxane, nona-n-butyl-1-(meth)acryloyloxytetrasiloxane, nona-dodecyl-1-(meth)acryloyloxytetrasiloxane, nona-hexyl-1-(meth)acryloyloxytetrasiloxane, nona-phenyl-1-(meth)acryloyloxytetrasiloxane, nona-octyl-1-(meth)acryloyloxytetrasiloxane, undecamethyl-1-(meth)acryloyloxypentasiloxane, undecaethyl-1-(meth)acryloyloxypentasiloxane, undeca-t-butyl-1-(meth)acryloyloxypentasiloxane, undecabenzyl-1-(meth)acryloyloxypentasiloxane, undeca-isopropyl-1-(meth)acryloyloxypentasiloxane, undeca-n-propyl-1-(meth)acryloyloxypentasiloxane, undeca-isobutyl-1-(meth)acryloyloxypentasiloxane, undeca-amyl-1-(meth)acryloyloxypentasiloxane, undeca-n-butyl-1-(meth)acryloyloxypentasiloxane, undeca-dodecyl-1-(meth)acryloyloxypentasiloxane, undeca-hexyl-1-(meth)acryloyloxypentasiloxane, undeca-phenyl-1-(meth)acryloyloxypentasiloxane, undeca-octyl-1-(meth)acryloyloxypentasiloxane tridecamethyl-1-(meth)acryloyloxyhexasiloxane, tridecaethyl-1-(meth)acryloyloxyhexasiloxane, trideca-t-butyl-1-(meth)acryloyloxyhexasiloxane, tridecabenzyl-1-(meth)acryloyloxyhexasiloxane, trideca-isopropyl-1-(meth)acryloyloxyhexasiloxane, trideca-n-propyl-1-(meth)acryloyloxyhexasiloxane, trideca-isobutyl-1-(meth)acryloyloxyhexasiloxane, trideca-amyl-1-(meth)acryloyloxyhexasiloxane, trideca-n-butyl-1-(meth)acryloyloxyhexasiloxane, trideca-dodecyl-1-(meth)acryloyloxyhexasiloxane, trideca-hexyl-1-(meth)acryloyloxyhexasiloxane, trideca-phenyl-1-(meth)acryloyloxyhexasiloxane, trideca-octyl-1-(meth)acryloyloxyhexasiloxane and polymers thereof.

The advantage of this invention is that the process uses reactants, which can be easily handled. Another advantage lies in the simplicity and safety of the procedure (no trapping of corrosive gaseous matter). Furthermore, another advantage is that the reaction is a one step procedure. Also no degradation of the material occurs. Due to its shortness, its easy work-up procedure and its high yield the process of the present invention can be considered as a substantial improvement over the existing methods described above.

Still another advantage of the invention is that the polyorganosilylated carboxylate monomers or polymers obtained by the process according to the invention have the exactly desired number of dihydrocarbylsilyloxy units. The polyorganosilylated carboxylate monomers obtained by the process of the invention can be polymerised with various other monomers such as vinyl monomers including acrylic esters, methacrylic esters, styrene, vinyl esters (e.g., vinyl acetate, vinyl propionate, vinyl butyrate, vinyl benzoate), vinyltoluene, alpha-methylstyrene, crotonic esters, and itaconic esters.

The polymers and copolymers of said monomers are useful in coating or paint composition. More preferably they are used as comonomer unit in the binder of antifouling coating compositions. When used in an antifouling coating composition, they give a film which undergoes neither cracking nor peeling and shows moderate hydrolysability to dissolve into seawater constantly at an adequate rate and which therefore exhibits excellent antifouling property for long term.

The antifouling coating compositions prepared using the monomers obtained by the process of the invention are tin-free coatings and provide an alternative to the present self-polishing coating technology based on hydrolysable tributyltin polymers (the use of which is due to be banned in antifouling paints by 2003). The polyorganosilylated carboxylate monomers provided by the process of the invention compared to organotin compounds are less toxic, less polar, more hydrophobic and more stable.

The invention will be more readily understood by reference to the following examples, which are included merely for purposes of illustration of certain aspects and embodiments of the present invention and are not intended to limit the invention.

### Examples

In the following examples, NMR data have been determined in CDCl₃ and are expressed as delta versus TMS. Unless otherwise stated, all the reactants were purchased from Aldrich and were used without purification.

### Example 1:

50 g of hexamethylcyclotrisiloxane, 35.6 g of trimethylsilyl methacrylate, 2.5 g of zinc chloride and 0.4 g of 4-methoxy phenol were dissolved in 50 ml of toluene. After 11 h at 100°C, the mixture was allowed to cool until room temperature, 40 ml of triethylamine were then added and the salts were filtered. After evaporation of the solvent, distillation under reduced pressure (0.3 mbar, 80°C) furnished pure nonamethyl-1-methacryloyloxytetrasiloxane.
¹³C NMR: 167.0, 137.7, 126.4, 18.5, 2.0, 1.3, 1.1, 0.0; ²⁹Si NMR: 7.3, -8.6, -20.1, -21.0;
IR (film): 2963, 1707, 1638, 1335, 1310, 1261, 1179, 1082, 1044, 842, 804 cm⁻¹.

### Example 2:

5 g of hexamethylcyclotrisiloxane, 3.5 g of trimethylsilyl methacrylate, 0.016 g of trifluoromethane sulfonic acid were stirred for 24h at room temperature. 0.5 ml of triethylamine was then added, and the salts were filtered to furnish nonamethyl-1-methacryloyloxy-tetrasiloxane.

### Example 3

5 g of hexamethylcyclotrisiloxane, 3.5 g of trimethylsilyl methacrylate and 0.3 g of Amberlyst A15 resin catalyst were stirred in 2.5 ml of toluene. After 7h at room temperature the catalyst was filtered and the solvent evaporated under reduced pressure to furnish nonamethyl-1-methacryloyloxy-tetrasiloxane.

The use of AMBERLYST A15 resin catalyst, which is an insoluble acidic resin, provides the advantages of allowing a clean transformation at room temperature. Furthermore it is easily removed by filtration.

### Example 4

5 g of hexamethylcyclotrisiloxane, 4.4 g of triethylsilyl methacrylate and 0.3 g of Amberlyst A15 resin were stirred in 2.5 ml of toluene. After 7 h at room temperature, the catalyst was filtered and the solvent evaporated under reduced pressure to furnish 1,1,1-triethyl-2,2,3,3,4,4-hexamethyl-1-methacryloyloxy-tetrasiloxane.

The compound was characterised by GC-MS. Column: HP5 (30 m/i.d.:0.32 mm i.d./thickness:0.25 microns), initial temperature: 70°C, final temperature: 300°C, rate: 10°C/min, retention time: 11.2 min. EIMS: M⁺.: 422 (<1%), 407 (100%), 393 (85%), 309 (5%), 253 (10%), 217 (10%);
IR (film): 2961, 2881, 1704, 1637, 1336, 1261, 1178, 1088, 1023, 808 cm⁻¹.

### Example 5

100 g of xylene was added to a 21 4-necks flask and kept under nitrogen. The four necks of the flask were equipped with stirrings means, a reflux condenser, a thermometer for temperature control of the reaction, and means for addition of the monomers.

A premix was prepared in a separate vessel, containing:
- 148.5 g of methyl methacrylate
- 346.5 g of butyl acrylate
- 49.5 g of trimethylsilyl methacrylate
- 9.9 g (=2% on total monomer weight) t-Butyl peroxy-2-ethyl hexanoate (=TBPEH sold under the name Trigonox 21S by Akzo-Nobel)

The premix was added drop by drop to the reaction vessel (total time = 3 hours) whilst maintaining the temperature at 90°C. Thirty minutes after the end of the addition of the premix, five post-additions of 0.1% TBPEH were made at intervals of 45 minutes. 15 minutes after the last post addition, the temperature was increased up to 120°C during one hour. After cooling the binder solution was thinned with 98 g of xylene to a viscosity of 14 dPa.s.

66.5 g of hexamethylcyclotrisiloxane and 1 g of Amberlyst A15 resin were added to the binder. After 5 h at room temperature, the catalyst was filtered and the binder was diluted with xylene to a viscosity of 14 dPa.s.

The NMR spectra of the obtained polymer was found to be identical to the NMR spectra of the polymer obtained by polymerising nonamethyl-1-methacryloyloxy-tetrasiloxane.

The process according to the invention has the advantage of being a one step process. Moreover during said process there is no release of corrosive matter. The purification of the product produced is straightforward and there is a good control of the MW of the polydimethyl siloxane produced. Furthermore the polydialkylsiloxane units do not undergo fragmentation or oligomerisation during the reaction.

While the invention has been described in detail and with reference to specific embodiments thereof, it will be apparent to one skilled in the art that various changes and modifications can be made therein without departing from the spirit and scope thereof.

## Claims

1. Process for the preparation of polyorganosilylated carboxylate monomers of general formula (I) or polymers thereof, comprising the steps of: 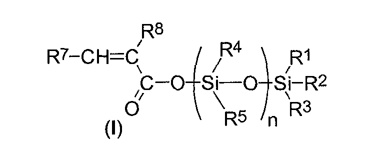 reacting a cyclosiloxane of formula (R⁴R⁵SiO)ₙ with unsaturated organosilylated carboxylate of formula (II) or copolymers thereof under the presence of a suitable catalyst, 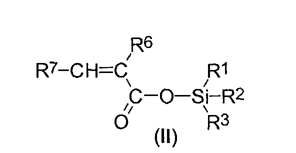 wherein R¹, R², R³, R⁴, R⁵ each independently represent hydrogen, alkyl, alkenyl, alkynyl, alkyloxy, aryl, aralkyl or halogen radical optionally substituted by one or more substituents independently selected from the group comprising alkyl, aralkyl, aryl, hydroxy, halogen, amino or amino alkyl radicals,
R⁶ represents hydrogen, alkyl radical, or -CH₂-CO₂-SiR¹R²R³,
R⁷ represents hydrogen, alkyl radical or -COOR⁹ wherein R⁹ represents an alkyl group,
R⁸ represents hydrogen, alkyl radical or -CH₂-CO₂-(SiR⁴R⁵O)ₙ-SiR¹R²R³, and
n represents a number of dihydrocarbylsiloxane units from 3 to 20.

2. Process according to claim 1, wherein R¹, R², R³, R⁴, R⁵, R⁶ and R⁹ are each independently selected from the group comprising methyl, ethyl, propyl, isopropyl, isobutyl, n-butyl, sec-butyl, t-butyl.

3. Process according to claim 2, wherein R¹, R², R³, R⁴, R⁵, R⁶ and R⁹ are methyl.

4. Process according to any of claims 1 to 3, wherein n represents a number of dihydrocarbylsiloxane units from 3 to 12, preferably from 3 to 8, more preferably from 3 to 6.

5. Process according to claim 4, wherein n is 3.

6. Process according to any of claims 1 to 5, wherein said unsaturated organosilylated carboxylate of formula (II) is selected from the group comprising trimethylsilyl (meth)acrylate, tri-t-butylsilyl (meth)acrylate, tribenzylsilyl (meth)acrylate, triethylsilyl (meth)acrylate, tri-isopropylsilyl (meth)acrylate, triisobutylsilyl (meth)acrylate, tri-n-amylsilyl (meth)acrylate, tri-n-butylsilyl (meth)acrylate, tri-n-dodecylsilyl (meth)acrylate, tri-n-hexylsilyl (meth)acrylate, tri-n-octylsilyl (meth)acrylate, tri-n-propylsilyl (meth)acrylate, triphenylsilyl (meth)acrylate, tri-p-methylphenylsilyl (meth)acrylate, dibutylcyclohexylsilyl (meth)acrylate, dibutylphenylsilyl (meth)acrylate; dicyclohexylphenylsilyl (meth)acrylate, diisopropyl-n-butylsilyl (meth)acrylate, diisopropylstearylsilyl (meth)acrylate, dimethylbutylsilyl (meth)acrylate, dimethylcyclohexylsilyl (meth)acrylate, dimethylhexylsilyl (meth)acrylate, dimethyloctylsilyl (meth)acrylate, dimethylphenylsilyl (meth)acrylate, ethyldibutylsilyl (meth)acrylate, ethyldimethylsilyl (meth)acrylate, lauryldiphenylsilyl (meth)acrylate, methyldibutylsilyl (meth)acrylate, n-octyldi-n-butylsilyl (meth)acrylate, t-butyl dimethylsilyl (meth)acrylate t-butyldiphenylsilyl (meth)acrylate, bis(trimethylsilyl) itaconate, t-butyldiphenylsilyl methyl fumarate, t-butyldiphenylsilyl methyl maleate, t-butyldiphenylsilyl n-butyl fumarate, t-butyldiphenylsilyl n-butyl maleate, triisopropylsilyl amyl fumarate, triisopropylsilyl amyl maleate, triisopropylsilyl methyl fumarate, triisopropylsilyl methyl maleate, tri-n-butylsilyl n-butyl fumarate, tri-n-butylsilyl n-butyl maleate, and polymers or copolymers thereof and the like.

7. Process according to claim 6, wherein said unsaturated organosilylated carboxylate of formula (II) is selected from the group comprising trimethylsilyl (meth)acrylate, tri-t-butylsilyl (meth)acrylate, tribenzylsilyl (meth)acrylate, triethylsilyl (meth)acrylate, tri-isopropylsilyl (meth)acrylate, triisobutylsilyl (meth)acrylate, tri-n-amylsilyl (meth)acrylate, tri-n-butylsilyl (meth)acrylate, tri-n-dodecylsilyl (meth)acrylate, tri-n-hexylsilyl (meth)acrylate, tri-n-octylsilyl (meth)acrylate, tri-n-propylsilyl (meth)acrylate and triphenylsilyl (meth)acrylate and polymers or copolymers thereof.

8. Process according to claim 7, wherein said unsaturated organosilylated carboxylate of formula (II) is trimethylsilyl methacrylate or a copolymer or a polymer thereof.

9. Process according to any of claims 1 to 8, wherein said cyclosiloxane of formula (R⁴R⁵SiO)ₙ is selected from the group comprising 1,1,3,3,5,5-hexamethylcyclotrisiloxane (D3), 1,1,3,3,5,5-hexaethylcyclotrisiloxane, 1,1,3,3,5,5-hexaphenyl-cyclotrisiloxane, 1,1,3,3,5,5-hexavinyl-cyclotrisiloxane, 1,3,5-trimethyl-1,3,5-trivinylcyclotrisiloxane, 1,3,5-trimethyl-1,3,5-triphenylcyclotrisiloxane, 1,3,5-trimethyl-1,3,5-tripropylcyclotrisiloxane, 1,3,5-triethyl-1,3,5-trimethylcyclotrisiloxane, 1,3,5-trimethyl-1,3,5-triphenethylcyclosiloxane, 1,3,5-trivinyltrihydro-cyclotrisiloxane, 1,3,5-trimethyltrihydro-cyclotrisiloxane, pentamethyl-cyclotrisiloxanes, 1,1,3,3,5,5,7,7-octamethylcyclotetrasiloxane (D4), 1,1,3,3,5,5,7,7-octaphenylcyclotetrasiloxane, 1,1,3,3,5,5,7,7-octavinylcyclotetrasiloxane, 1,1,3,3,5,5,7,7-octahydrocyclotetrasiloxane, 1,3,5,7-tetramethyl-1,3,5,7-tetrahydro-cyclotetrasiloxane, 1,3,5,7-tetramethyl-1,3,5,7-tetra(1-octyl)-cyclotetrasiloxane, 1,3,5,7-tetravinyl-1,3,5,7-tetramethyl-cyclotetrasiloxane, 1,3,5,7-tetravinyl-1,3,5,7-tetraethylcyclotetrasiloxane, 1,3,5,7-tetraaIIyI-1,3,5,7-tetraphenyl-cyclotetrasiloxane, 1,3,5,7-tetra(1-hexadecyl)-1,3,5,7-tetramethyl-cyclotetrasiloxane, 1,3,5,7-tetraoctyltetrahydro-cyclotetrasiloxane, 1,3,5,7-tetravinyltetrahydro-cyclotetrasiloxane, 1,3,5,7-tetraethyltetrahydro-cyclotetrasiloxane, 1,3,5,7-tetrapropenyltetrahydro-cyclotetrasiloxane, 1,3,5,7-tetrapentenyltetrapentyl-cyclotetrasiloxane, 1,3,5,7-tetraphenyltetrahydro-cyclotetrasiloxane, pentamethyl-cyclotetrasiloxanes, hexamethyl-cyclotetrasiloxanes, 1,1,3,3,5,5,7,7,9,9-decamethylcyclopentasiloxane (D5), 1,1,3,3,5,5,7,7,9,9-decahydrocyclopentasiloxane, 1,3,5,7,9-pentavinyl-1,3,5,7,9-pentamethyl-cyclopentasiloxane, 1,3,5,7,9-pentadecenyl-1,3,5,7,9-pentapropyl-cyclopentasiloxane, 1,3,5,7,9-pentamethylpentahydro-cyclopentasiloxane, 1,3,5,7,9-pentavinylpentahydro-cyclopentasiloxane, tetramethylcyclopentasiloxanes, hexamethyl-cyclopentasiloxanes, heptamethyl-cyclopentasiloxanes, 1,1,3,3,5,5,7,7,9,9,11,11-dodecamethyl-cyclohexasiloxane (D6), 1,1,3,3,5,5,7,7,9,9,11,11-dodecahydro-cyclohexasiloxane, 1,3,5,7,9,11-hexavinylhexamethyl-cyclohexasiloxane, 1,3,5,7,9,11-hexamethylhexahydro-cyclohexasiloxane, tetramethyl-cyclohexasiloxanes, pentamethyl-cyclohexasiloxanes, 1,3,5,7,9,11,13,15,17,19-decavinyldecahydrocyclodecasiloxane, 1,3,5,7,9,11,13,15,17,19,21,23,25,27,29-pentadecavinylpentadecahydro-cyclopentadecasiloxane and the like.

10. Process according to claim 9, wherein said cyclosiloxane of formula (R⁴R⁵SiO)ₙ is selected from the group comprising 1,1,3,3,5,5-hexamethylcyclotrisiloxane (D3), 1,1,3,3,5,5,7,7-octamethylcyclotetrasiloxane (D4), 1,1,3,3,5,5,7,7,9,9-decamethyl-cyclopentasiloxane (D5), 1,1,3,3,5,5,7,7,9,9,11,11-dodecamethyl-cyclohexasiloxane (D6).

11. Process according to claim 10, wherein said cyclosiloxane of formula (R⁴R⁵SiO)ₙ is 1,1,3,3,5,5-hexamethyl-cyclotrisiloxane (D3).

12. Process according to any of claims 1 to 11, wherein said suitable catalyst for the reaction is an acidic catalyst.

13. Process according to claim 12, wherein said catalyst is selected from the group comprising hydrochloric acid, acetic acid, nitric acid, sulfuric acid, trifluoromethanesulfonic acid, trifluoracetic acid, acetic acid, AMBERLYST A15, AMBERLYST 38 W, AMBERLYST 36, AMBERJET 1500H, AMBERJET 1200H, DOWEX MSC-1, DOWEX 5OW DELOXAN ASP I/9, DIAION SK1B, LEWATIT VP OC 1812, LEWATIT S 100 MB, LEWATIT S 100 G1, NAFION SAC13, NAFION NR50, CT275, ZnCl₂, BeCl₂, TiCl₄, SnCl₄, FeCl₃, FeCl₂, SbCl₅, AlCl₃ and other metal halides.

14. Process according to claim 13, wherein said catalyst is ZnCl₂.

15. Process according to claim 13, wherein said catalyst is trifluoromethanesulfonic acid.

16. Process according to claim 13, wherein said catalyst is AMBERLYST A15.

17. Process according to any of claims 12 to 16, further comprising the steps of neutralising the acidic catalyst with a base.

18. Process according to claim 17, wherein said base is selected from the group comprising triethylamine, diethylamine, tributylamine, hexamethyldisilazane N-methylmorpholine, diisopropylethylamine, dicyclohexylamine, N-methylpiperidine, pyridine, 4-pyrrolidinopyridine, picoline, 4-(N,N-dimethylamino)pyridine, 2,6-di(t-butyl)-4-methylpyridine, quinoline, N,N-dimethylaniline and N,N-diethylaniline and the like.

19. Process according to claim 18, wherein said base is triethylamine.

20. Process according to any of claims 1 to 19, wherein the step of reacting the cyclosiloxane of formula (R⁴R⁵SiO)ₙ with the unsaturated organosilylated carboxylate of formula (II) or a copolymer or a polymer thereof is optionally performed in the presence of a suitable solvent.

21. Process according to claim 20, wherein said solvent is a nonpolar inert solvent selected from the group comprising benzene, toluene, xylene, mesitylene, ethylbenzene, pentane, hexane, cyclohexane, heptane, octane, decane, decahydronaphthalene, diethyl ether, diisopropyl ether, diisopropyl ether, diisobutyl ether, or mixtures thereof.

22. Process according to any of claims 1 to 21, wherein said reaction is preformed at a temperature selected in the range of 20 to 150 °C, preferably 50 to 120 °C, more preferably 90 to 110 °C.

23. Process according to any of claims 1 to 22, wherein said reaction is performed at room temperature.

24. Polyorganosilylated carboxylate monomers of formula (I) or polymers thereof obtained by the process according to any of claims 1 to 23.

25. Polyorganosilylated carboxylate monomers of formula (I) or polymers thereof obtainable by the process according to any of claims 1 to 23.

26. Polyorganosilylated carboxylate monomers or polymers thereof according to any of claims 24 or 25, wherein R¹, R², R³, R⁴, R⁵, R⁶ and R⁹ are each independently selected from the group comprising methyl, ethyl, propyl, isopropyl, isobutyl, n-butyl, sec-butyl, t-butyl.

27. Polyorganosilylated carboxylate monomers or polymers thereof according to claim 26, wherein R¹, R², R³, R⁴, R⁵, R⁶ and R⁹ are methyl.

28. Polyorganosilylated carboxylate monomers or polymers thereof according to any of claims 24 to 27, wherein n represents a number of dihydrocarbylsiloxane units from 3 to 12, preferably from 3 to 8, more preferably from 3 to 6.

29. Polyorganosilylated carboxylate monomers or polymers thereof according to claim 28, wherein n is 3.

30. Use of a polyorganosilylated carboxylate monomers or polymers thereof according to any of claims 24 to 29 in coating compositions.

31. Use of polyorganosilylated carboxylate monomers according to any of claims 24 to 30 as comonomer unit in the binder of antifouling coating compositions.
